(19) Europäisches Patentamt
European Patent Office
Office européen des brevets

(11) **EP 4 070 043 B1**

(12) **EUROPÄISCHE PATENTSCHRIFT**

(45) Veröffentlichungstag und Bekanntmachung des Hinweises auf die Patenterteilung:
**30.10.2024 Patentblatt 2024/44**

(21) Anmeldenummer: **20811304.3**

(22) Anmeldetag: **20.11.2020**

(51) Internationale Patentklassifikation (IPC):
***G01F 1/58*** *(2006.01)*

(52) Gemeinsame Patentklassifikation (CPC):
**G01F 1/58**

(86) Internationale Anmeldenummer:
**PCT/EP2020/082905**

(87) Internationale Veröffentlichungsnummer:
**WO 2021/110442 (10.06.2021 Gazette 2021/23)**

(54) **VERFAHREN ZUM BETREIBEN EINES MAGNETISCH-INDUKTIVEN DURCHFLUSSMESSGERÄTES UND MAGNETISCH-INDUKTIVES DURCHFLUSSMESSGERÄT**

METHOD FOR OPERATING A MAGNETO-INDUCTIVE FLOWMETER, AND MAGNETO-INDUCTIVE FLOWMETER

PROCÉDÉ DE MISE EN OEUVRE D'UN DÉBITMÈTRE MAGNÉTO-INDUCTIF ET DÉBITMÈTRE MAGNÉTO-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.12.2019 DE 102019133462**

(43) Veröffentlichungstag der Anmeldung:
**12.10.2022 Patentblatt 2022/41**

(60) Teilanmeldung:
**24201074.2**

(73) Patentinhaber: **Endress+Hauser Flowtec AG**
**4153 Reinach (CH)**

(72) Erfinder:
• **SPAHLINGER, Andre**
**79415 Bad Bellingen (DE)**
• **SCHAUBHUT, André**
**79650 Schopfheim (DE)**
• **RUFER, Heinz**
**4143 Dornach (CH)**
• **KÜNG, Thomas**
**4142 Münchenstein (CH)**

(74) Vertreter: **Penner, Paul**
**Endress + Hauser Group Services (Deutschland) AG+Co. KG**
**PatServe**
**Colmarer Straße 6**
**79576 Weil am Rhein (DE)**

(56) Entgegenhaltungen:
WO-A1-2014/026841    DE-A1- 102012 105 716
DE-A1- 102016 122 495    US-A- 4 408 497
US-A- 4 784 000    US-A1- 2006 081 067

EP 4 070 043 B1

**Beschreibung**

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, das ein Magnetfeld senkrecht zur Flussrichtung des fließenden Mediums erzeugt. Dafür werden üblicherweise einzelne Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung U die Durchflussgeschwindigkeit $u$ und, mit Hinzunahme eines bekannten Rohrquerschnitts, der Volumendurchfluss $\dot{V}$ ermittelt werden.

Magnetisch-induktive Durchflussmessgeräte finden vielfach Anwendung in der Prozess- und Automatisierungstechnik für Fluide ab einer elektrischen Leitfähigkeit von etwa 5 µS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Herkömmliche magnetisch-induktive Durchflussmessgeräte weisen ein Gehäuse um das Messsystem auf, welches dazu eingerichtet ist das Messsystem vor Beschädigungen und externen Einflüssen, wie Fremdfeldern zu schützen. Bei mangelnder Abschirmung beeinflussen externe Magnetfelder das im Inneren des Messrohres erzeugte Magnetfeld, was zu Messfehlern führt.

Der Erfindung liegt die Aufgabe zugrunde ein Verfahren zum Betreiben eines magnetisch-induktiven Durchflussmessgerätes bereitzustellen, mit dem Einflüsse durch magnetische Fremdfelder detektiert werden können. Die Patentanmeldung DE 1020 16122495 A1 offenbart ein Verfahren zum Betreiben eines magnetisch-induktiven Durchflussmessgeräts sowie ein magnetisch-induktives Durchflussmessgerät, welches zumindest eine höhere Temperaturstabilität aufweist.

Des Weiteren liegt die Aufgabe zugrunde ein magnetisch-induktives Durchflussmessgerät bereitzustellen, dass dazu ausgebildet ist das Verfahren auszuführen.

Die Aufgabe wird gelöst durch das Verfahren zum Betreiben eines magnetisch-induktiven Durchflussmessgerätes nach Anspruch 1 und durch das magnetisch-induktive Durchflussmessgerät nach Anspruch 7.

Das erfindungsgemäße Verfahren zum Betreiben eines magnetisch-induktiven Durchflussmessgerätes,

weist ein Messrohr zum Führen eines fließfähigen Mediums, mindestens zwei Messelektroden zum Erfassen einer strömungsgeschwindigkeitsabhängigen, in dem Medium induzierten Messspannung und eine magnetfelderzeugende Vorrichtung zur Erzeugung eines das Messrohr durchsetzenden Magnetfeldes auf,

wobei die magnetfelderzeugende Vorrichtung eine Spule aufweist;
und umfasst die Verfahrensschritte:

- Anlegen einer Steuerspannung an die Spule zur Erzeugung einer zeitlichen Spulenstromänderung; und

- Bestimmen der zeitlichen Spulenstromänderung in einem Umschaltbereich,

wobei im Umschaltbereich solange eine Spulenstromänderung vorliegt, bis ein Soll-Spulenstrom $I_{Soll}$ erreicht ist.

Es ist besonders vorteilhaft, wenn über die Überwachung der zeitlichen Spulenstromänderung auf die Präsenz von Störeinflüssen zurückgeschlossen werden kann. Somit sind keine zusätzlichen Sensoren im oder am Messrohr notwendig, wie Hall-Sensoren oder Förster-Sonden, welche das resultierende Magnetfeld im Messrohr überwachen.

Mögliche Störeinflüsse auf das im Messrohr resultierende Magnetfeld sind externe Magnetfelder von Permanentmagneten, Schwankungen der Umgebungstemperatur, ferromagnetische Bestandteile im geführten Medium, Beschädigungen der magnetfelderzeugenden Vorrichtung, Produktionsfehler und/oder externe Magnetfelder von beispielsweise Elektromotoren oder -generatoren.

Herkömmliche magnetisch-induktive Durchflussmessgerät weisen Spulen auf, die mit Gleichstrom mit alternierender Stromrichtung betrieben werden. Der Zeitraum, in dem der Spulenstrom seinen Sollwert erreicht hat und in dem der Spulenstrom im Wesentlichen konstant ist, nennt man Messbereich. Der Zeitraum zwischen zwei aufeinanderfolgenden Messbereiche wird im Folgenden als Umschaltbereich bezeichnet. Das Umschalten des Vorzeichens der angelegten Spulenspannung bewirkt, dass der Spulenstrom in diesem Zeitraum so lange variiert, bis er einen Soll-Spulenstrom $I_{Soll}$ erreicht hat.

Der Soll-Spulenstrom $I_{Soll}$ kann der Spulenstrom sein, auf dem geregelt wird und bei dessen Erreichen eine Messung der im fließenden Medium induzierten Spannung erfolgt.

In dem Zusammenhang wird ein derartiger Soll-Spulenstrom als Mess-Spulenstrom bezeichnet. Es sind jedoch auch Verfahren zum Regeln des Spulenstroms bekannt, bei denen der Spulenstrom im Umschaltbereich auf einen weiteren Soll-Spulenstrom geregelt wird, nämlich einem Peak-Spulenstrom, welcher größer als der Mess-Spulenstrom ist und bewirkt, dass die Zeit reduziert wird, welche abgewartet werden muss, bis der Spulenstrom den Mess-Spulenstrom nach dem Umschalten erreicht hat.

Vorteilhafte Ausgestaltungen der Erfindung sind Gegenstand der Unteransprüche. Erfindungsgemäß umfasst der Umschaltbereich einen $\gamma$-Zeitbereich,

wobei die zeitliche Spulenstromänderung in dem $\gamma$-Zeitbereich ($\gamma$) ermittelt wird,
wobei auf den $\gamma$-Zeitbereich ($\gamma$) unmittelbar ein $\delta$-Zeitbereich ($\delta$) folgt, in dem die Spulenstromänderung ein entgegengesetztes Vorzeichen hat als die Spulenstromänderung im $\gamma$-Zeitbereich ($\gamma$);

- Messen einer an der Spule anliegenden Spulenspannung; und
- Ermitteln einer Selbstinduktivität der Spule mittels der zeitlichen Spulenstromänderung und der Spulenspannung.

Der $\gamma$-Zeitbereich zeichnet sich dadurch aus, dass im gesamten Zeitraum ein Spulenstrom fließt. Das heißt, dass der Nulldurchgang nicht im $\gamma$-Zeitbereich liegt. Des Weiteren ist es vorteilhaft, wenn die im $\gamma$-Zeitbereich liegenden Spulenstromwerte größer sind als die Spulenstromwerte in dem Messbereich bzw. als der Zielwert des Spulenstroms. Somit umfasst der $\gamma$-Zeitbereich einen Teil des Spulenstromverlaufes, welcher durch das Einschwingen des Spulenstroms charakterisiert ist. Vorteilhafterweise werden die Spulenstromwerte des $\gamma$-Zeitbereiches genommen, die im Wesentlichen auf einer Geraden liegen bzw. die nicht mehr als 1%, insbesondere nicht mehr als 0,5% und vorzugsweise nicht mehr als 0,2% von der Geraden abweichen.

Der $\delta$-Zeitbereich folgt unmittelbar nach dem $\gamma$-Zeitbereich und zeichnet sich durch ein entgegengesetztes Vorzeichen der Spulenstromänderung im Vergleich zum Vorzeichen der Spulenstromänderung im $\gamma$-Zeitbereich aus. Der $\delta$-Zeitbereich umfasst einen Teil des Spulenstromverlaufes, welcher durch das Einschwingen des Spulenstroms bis zum Erreichen eines konstanten Spulenstroms bzw. Zielwertes charakterisiert ist. Der $\delta$-Zeitbereich endet im Wesentlichen dann, wenn der Spulenstrom nur noch 1% vom Mess-Spulenstrom abweicht.

Es ist nicht möglich den Zeitbereich zu nehmen, in dem die Wirbelströme minimal sind, da dies nur dann auftritt, wenn der Spulenstrom konstant ist, wodurch die Selbstinduktivität nicht bestimmt werden kann. Die Spulenspannung und die Spulenstromänderung werden im $\gamma$-Zeitbereich gemessen und für die Bestimmung der Selbstinduktivität verwendet, da die Wirbelströme in dem Zeitbereich stabil bzw. konstant sind und der Einfluss ebendieser auf die Selbstinduktivität minimal ist. Somit lässt sich zwischen Einflüsse durch Wirbelströme und externe Störquellen unterscheiden.

Eine Ausgestaltung sieht vor, dass im $\gamma$-Zeitbereich auftretende Wirbelströme im Wesentlichen zeitlich konstant sind.

Eine Ausgestaltung sieht zusätzlich vor, dass der $\gamma$-Zeitbereich ($\gamma$) einen $\gamma$-Zeitbereich-Anfang ($T_{\gamma\text{-}Anfang}$) aufweist,
wobei beim $\gamma$-Zeitbereich-Anfang ($T_{\gamma\text{-}Anfang}$) ein Betrag des Spulenstromes bei mindestens 75%, insbesondere mindestens 85% und bevorzugt 95% eines Betrages des Soll-Spulenstromes $I_{Soll}$ liegt.

Es ist besonders vorteilhaft, wenn die Spulenstromänderung für die Ermittlung der Selbstinduktivität der Spule erst dann bestimmt wird, wenn der Spulenstrom im Umschaltbereich mindestens 75%, insbesondere mindestens 85% und bevorzugt 95% eines Betrages des Soll-Spulenstromes $I_{Soll}$ erreicht hat, wobei der Soll-Spulenstrom der Mess-Spulenstrom oder der Peak-Spulenstrom sein kann. Das $\gamma$-Zeitbereich-Ende ($T_{\gamma\text{-}Ende}$) wird durch den Beginn des $\delta$-Zeitbereiches definiert.

Eine Ausgestaltung sieht vor, dass die Spulenstromänderung in einem $\varepsilon$-Zeitbereich ermittelt wird, wobei der Spulenstrom im $\varepsilon$-Zeitbereich einmal die Fließrichtung ändert.

Zur Erzeugung des Magnetfeldes wird eine Steuerspannung an eine Spulenanordnung, umfassend mindestens eine Spule angelegt. Der sich daraus ergebende charakteristische Spulenspannungsverlauf weist mehrere Zeitbereiche auf. Der $\varepsilon$-Zeitbereich beschreibt den Zeitraum, in dem der Spulenstrom die Fließrichtung ändert. Er umfasst den Nulldurchgang des Spulenstroms, in dem kein Strom durch die Spule fließt und den unmittelbaren Zeitraum davor und danach.

Es ist besonders vorteilhaft, wenn die Spulenstromänderung im $\varepsilon$-Zeitbereich detektiert wird und somit der Zustand mit eingeht, in dem der Spulenstrom im Wesentlichen Null oder zumindest minimal ist. Somit kann der Widerstand und somit auch die temperaturabhängigen Einflüsse des Widerstandes der Spulenwicklung minimiert werden.

Eine weitere Ausgestaltung sieht vor, dass der $\varepsilon$-Zeitbereich ($\varepsilon$) einen $\varepsilon$-Zeitbereich-Anfang ($T_{\varepsilon\text{-}Anfang}$) aufweist,
wobei ein Betrag des Spulenstromes bei dem $\varepsilon$-Zeitbereich-Anfang ($T_{\varepsilon\text{-}Anfang}$) kleiner 15%, insbesondere kleiner 10% und bevorzugt kleiner 5% des Betrages des Soll-Spulenstromes $I_{Soll}$ ist.

Eine weitere Ausgestaltung sieht vor, dass der $\varepsilon$-Zeitbereich ($\varepsilon$) ein $\varepsilon$-Zeitbereich-Ende ($T_{\varepsilon\text{-}Ende}$) aufweist,
wobei ein Betrag des Spulenstromes bei dem $\varepsilon$-Zeitbereich-Ende ($T_{\varepsilon\text{-}Ende}$) kleiner 15%, insbesondere kleiner 10% und bevorzugt kleiner 5% des Betrages des Soll-Spulenstromes $I_{Soll}$ ist.

Induktivität ist eine Eigenschaft elektrischer Stromkreise oder Bauelemente, insbesondere von Spulen. Es ist zu unterscheiden zwischen Selbstinduktivität (auch Eigeninduktivität oder Selbstinduktion genannt) und Gegeninduktivität. Die Selbstinduktivität $L$ eines Stromkreises setzt die zeitliche Änderungsrate des elektrischen Stroms $I$ mit der elektrischen Spannung $U$ in Beziehung:

$$U = L \cdot dI/dt$$

Die Gegeninduktion (oder induktive Kopplung) ist die gegenseitige magnetische Beeinflussung zweier oder mehrerer räumlich benachbarter elektrischer Stromkreise durch die elektromagnetische Induktion infolge einer Änderung des magnetischen Flusses.

Störeinflüsse beeinflussen die Selbstinduktivität des Gesamtsystem des magnetisch-induktiven Durchflussmessgerätes. Durch die Überwachung der Selbstinduktivität lassen sich Störeinflüsse detektieren und kompensieren, ohne das zusätzliche Sensorik im oder am Messrohr angebracht werden muss. Daher ist die Auswerteschaltung dazu ausgebildet die Selbstinduktivität aus dem Spulenstrom bzw. aus der Spulenstromänderung und der Spulenspannung zu ermitteln.

Vorteilhafterweise ist eine Messchaltung dazu eingerichtet die Spulenspannung und den Spulenstrom bzw. die Spulenstromänderung zu bestimmen.

Eine Ausgestaltung sieht zusätzlich folgende Verfahrensschritte vor:

- Ausgeben der zeitlichen Spulenstromänderung oder einer von der Spulenstromänderung abhängigen Größe.

Vorteilhafterweise wird die Spulenstromänderung oder eine von der Spulenstromänderung abhängige und für das Gesamtsystem charakteristische Größe mittels einer Ausgabeeinheit an den Nutzer weitergegeben. Somit erhält der Nutzer einen weiteren Überwachungsparameter, der insbesondere bei den Anwendungen Vorteile bietet, in denen ferromagnetischen Bestandteilen im Medium geführt werden.

Eine Ausgestaltung sieht zusätzlich folgende Verfahrensschritte vor:

- Bestimmen eines einer ermittelten Abweichung der zeitlichen Spulenstromänderung von einem Referenzwert zugeordneten Korrekturterms; und

- Berechnen eines korrigierten Messspannungwertes $U_{korr}$ unter Berücksichtigung des Korrekturterms und eines gemessenen Messspannungwertes $U_{meas}$ und/oder einer korrigierten, vom gemessenen Messspannungswert abhängigen Größe.

Eine Ausgestaltung sieht vor, dass der Referenzwert mittels eines mathematischen Modells, Kalibrationsverfahrens und/oder Simulationsprogrammes ermittelt ist, wobei der Abweichung der Spulenstromänderung vom Referenzwert jeweils ein Korrekturterm zugeordnet ist.

Für gewisse Anwendungen ist es nicht ausreichend, dass eine permanente Diagnose des Zustandes des Magnetfeldes erfolgt. Gerade im Trinkwasserbereich wird vorgeschrieben, dass die Durchflussmessgerät unempfindlich gegenüber externer Störeinflüsse, wie beispielsweise durch Permanentmagneten ist.

Es ist daher vorteilhaft, wenn die Auswerteschaltung dazu eingerichtet ist die detektierte Abweichung der Spulenstromänderung von einem Referenzwert und die somit Beeinflussung bzw. Verfälschung des ermittelten Durchflussmesswertes zu korrigieren. Der Referenzwert wird zuvor bei der Justierung des magnetisch-induktiven Durchflussmessgerätes ermittelt und in einer Speichereinheit der Auswerteschaltung abgelegt.

Das erfindungsgemäße magnetisch-induktive Durchflussmessgerät ist dadurch gekennzeichnet, dass das Durchflussmessgerät eine Betriebs-, Messund/oder Auswerteschaltung aufweist, die dazu eingerichtet ist, das Verfahren nach einem der vorherigen Ansprüche auszuführen.

Messschaltungen im Bereich der Durchflussmesstechnik sind hinlänglich bekannt. Die Aufgabe der Messschaltung ist es, sehr kleine Absolutwerte und Änderungen der jeweiligen Messgröße zu detektieren. Es gibt eine Vielzahl an unterschiedlichen Ausgestaltungen, die jeweils ihre Vor- und Nachteile haben.

Zum einen kann die Messschaltung dazu eingerichtet sein, ein Potential an einer der Messelektrode in Bezug auf ein Referenzpotential abzugreifen. Somit kann selbst dann, wenn eine der zwei Messelektroden ausfällt, weiterhin die Durchflussgeschwindigkeit anhand eines ermittelten Potentials bestimmt werden. Als Referenzpotential eignet sich das Gehäusepotential oder ein Erdpotential.

Zum anderen kann die Messschaltung so ausgebildet sein, dass sie eine zwischen zwei Messelektroden oder zwei Messelektrodengruppen vorherrschende Potentialdifferenz detektiert und aufnimmt.

Zusätzlich kann die Messschaltung dazu eingerichtet sein die Spulenspannung und den Spulenstrom bzw. die Spulenstromänderung an den Spulen zu bestimmen.

Eine Messschaltung umfasst daher einen Analog/Digital-Wandler, der die eingehenden Signale, in dem Fall die aktuell an dem jeweiligen Messelektrodenpaar anliegende Potentialdifferenz, das an der jeweiligen Messelektrode vorherrschende elektrische Potential oder der durch die Spule fließende Strom, in digitale Daten umwandelt, die dann durch eine Auswerteschaltung weiterverarbeitet oder gespeichert werden. Es sind aber auch andere Messumsetzer oder Messumformer der digitalen Messtechnik bekannt und geeignet zum Detektieren einer Messspannung oder eines elektrischen Potentials.

Die Auswerteschaltung ist dazu eingerichtet, die durch die Messschaltung gemessenen Messwerte der jeweiligen Messgrößen zu verarbeiten und die gesuchte Messgröße zu ermitteln. Eine Auswerteschaltung umfasst daher üblicherweise Mikroprozessoren, Verstärker und Rauschfilter. Die Mess- und Auswerteschaltung können modular ausgebildet sein und mittels einer drahtlosen Verbindung kommunizieren, oder Teil einer einzelnen Mess- und Auswerteelektronik sein, die in einem Gehäuse der Durchflussmesssonde angeordnet ist.

Eine spezielle Ausgestaltung sieht vor, dass ein an die Spulen angelegter zeitlicher Spulenspannungsverlauf Umschaltbereiche und Messbereiche aufweist,

wobei Umschaltbereiche und Messbereiche alternieren,

wobei die Steuerspannung einer Messbereiche und die Steuerspannung einer insbesondere unmittelbar auf die Messbereiche folgenden Umschaltbereich entgegengesetzte Vorzeichen aufweisen.

Es ist besonders vorteilhaft, wenn für die Bestimmung des Durchflussmesswertes die induzierte Messspannung der Umschaltbereich abgewartet und ausschließlich in dem Messbereich gemessen wird, da sich das Magnetsystem in dem Zeitraum eingeschwungen hat. Das Umpolen der Spannungsquelle führt zu einem stabilen Nullpunkt und macht die Messung unempfindlich gegenüber Einflüssen durch Mehrphasenstoffe, Inhomogenitäten in der Flüssigkeit oder geringer Leitfähigkeit.

Eine spezielle Ausgestaltung sieht vor, dass die Spulenstromänderung in dem Umschaltbereich bestimmt wird.

Vorzugsweise wird der Spulenstrom bzw. die Spulenstromänderung in dem Umschaltbereich bestimmt, da der Spulenstrom in dem Messbereich konstant bzw. die Spulenstromänderung minimal ist.

Eine spezielle Ausgestaltung sieht vor, dass die Steuerspannung in dem Umschaltbereich konstant ist,

wobei die Steuerspannung in dem Umschaltbereich einen ersten Spannungswert annimmt,

wobei die Steuerspannung in dem Messbereich einen zweiten Spannungswert annimmt,

wobei der erste Spannungswert größer ist als der zweite Spannungswert.

Dieser charakteristische Spulenspannungsverlauf minimiert die Zeit in welcher der Spulenstrom einschwingt. Dadurch beginnt der Messbereich früher und die Arbeitsfrequenz kann erhöht werden.

Die Erfindung wird anhand der nachfolgenden Figuren näher erläutert. Es zeigt:

Fig. 1: ein magnetisch-induktives Durchflussmessgerät; und

Fig. 2: ein Diagramm, welches den zeitlichen Verlauf des Spulenstroms und der Spulenspannung abbildet.

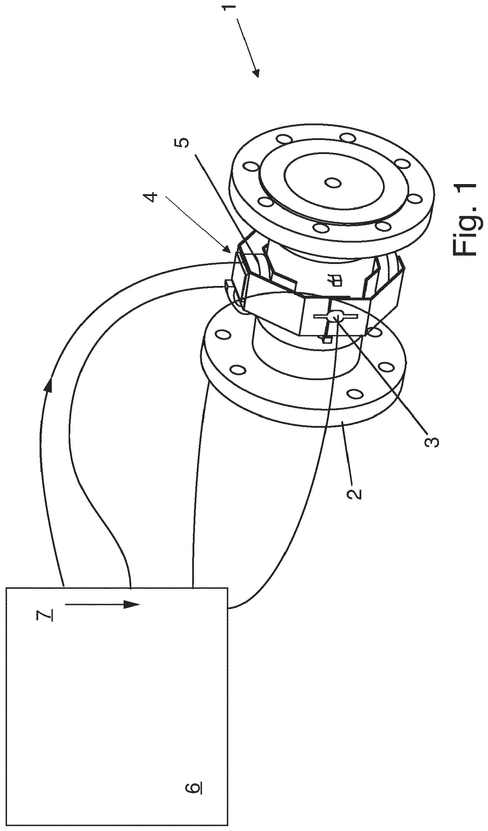

Der Aufbau und das Messprinzip des magnetisch-induktiven Durchflussmessgerätes 1 ist grundsätzlich bekannt (siehe Fig. 1). Durch ein Messrohr 2 wird ein Medium geleitet, das eine elektrische Leitfähigkeit aufweist. Das Messrohr 2 umfasst üblicherweise ein metallisches Rohr oder ein Kunststoffrohr. Eine magnetfelderzeugende Vorrichtung 4 ist so angebracht, dass sich die Magnetfeldlinien senkrecht zu einer durch die Messrohrachse definierten Längsrichtung orientieren. Als magnetfelderzeugende Vorrichtung 4 eignet sich vorzugsweise eine Sattelspule oder ein Polschuh mit aufgesetzter Spule 5. Bei angelegtem Magnetfeld entsteht im Messrohr 2 eine Potentialverteilung, die mit an der Innenwand des Messrohres 2 gegenüberliegend angebrachten Messelektroden 3 abgegriffen wird. In der Regel werden zwei Messelektroden 3 verwendet, welche diametral angeordnet sind und eine Elektrodenachse bilden, die senkrecht zu einer Symmetrieachse der Magnetfeldlinien und der Längsachse des Messrohres 2 verläuft. Anhand der gemessenen Messspannung kann, unter Berücksichtigung der magnetischen Flussdichte, die Durchflussgeschwindigkeit und, unter Berücksichtigung der Rohrquerschnittsfläche, der Volumendurchfluss des Mediums bestimmt werden. Ist die Dichte des Mediums bekannt, so kann der Massedurchfluss bestimmt werden. Um das Ableiten der an den Messelektroden 3 anliegenden Messspannung über das Rohr zu verhindern, wird die Innenwand mit einem isolierenden Material bzw. einem Kunststoff-Liner ausgekleidet.

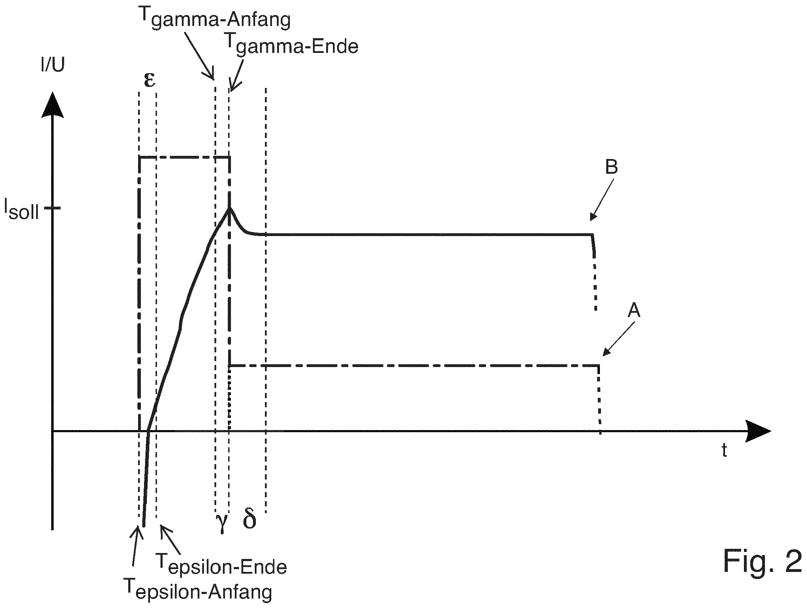

Das mittels der Spulen- und Polschuhanordnung aufgebaute Magnetfeld wird durch einen getakteten Gleichstrom wechselnder Strömungsrichtung erzeugt. Eine Betriebsschaltung 6 ist mit den beiden Spulen 5 verbunden und ist dazu eingerichtet eine Steuerspannung mit einem charakteristischen Verlauf an die Spulenanordnung anzulegen, mit welchem der Spulenstrom reguliert wird. Ein charakteristischer Verlauf der Steuerspannung ist in der Fig. 2 zu sehen. Das Umpolen der Steuerspannung gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit. Eine Mess- und/oder Auswerteschaltung 7 liest die an den Messelektroden 3 anliegende Spannung aus und gibt die Durchflussgeschwindigkeit und/oder den errechneten Volumendurchfluss und/oder den Massedurchfluss des Mediums aus. Bei dem in Fig. 1 dargestellten Querschnitt eines magnetisch-induktiven Durchflussmessgerät 1 befinden sich die Messelektroden 3 in direktem Kontakt mit dem Medium. Die Kopplung kann jedoch auch kapazitiv erfolgen. Erfindungsgemäß ist die Mess- und/oder Auswerteschaltung 7 zusätzlich dazu eingerichtet die an den Spulen tatsächlich anliegenden Spulenspannung und den Spulenstrom bzw. die zeitliche Spulenstromänderung zu messen. Eine nicht abgebildete Anzeigeeinheit gibt die ermittelte Spulenstromänderung oder eine von der Spulenstromänderung abhängigen Größe aus. Alternativ kann eine Meldung oder ein Warnhinweis ausgegeben werden, wenn diese vom hinterlegten Referenzwert abweichen. Der Referenzwert wird mittels eines mathematischen Modells, Kalibrationsverfahrens und/oder Simulationsprogrammes ermittelt. Dies ist jedoch insbesondere bei Anwendungen im Trinkwasserbereich nicht ausreichend. Daher ist die Mess- und/oder Auswerteschaltung 7 dazu eingerichtet die ermittelten Abweichung mittels eines hinterlegten Korrekturfaktors zu korrigieren.

Die Fig. 2 zeigt ein Diagramm, welches den zeitlichen Verlauf des Spulenstroms B und der Spulenspannung A abbildet.

Der abgebildete Verlauf der Spulenspannung A ist charakterisiert durch zwei konstante Spannungswerte, die jeweils für einen gewissen Zeitraum an die Spulen angelegt werden, wobei sich die beiden Spannungswerte und die jeweils zugeordneten Zeiträume unterscheiden. Es sind jedoch auch Betriebsverfahren für magnetisch-induktive Durchflussmessgeräte bekannt, in denen nur ein konstanter Spannungswert mit wechselnder Polarität oder ein Spannungsverlauf angelegt wird, bei dem der Spannungswert zeitlich nachgeregelt wird. Die vorteilhaften Zeitbereiche, in denen die Einflüsse auf die Selbstinduktivität der Spule minimal sind gelten jedoch auch für andere Betriebsverfahren. Der dargestellte Verlauf A zeigt ein Zeitintervall, welches sich mit der Zeit wiederholt und dessen Vorzeichen alterniert. Im Stand der Technik sind Spannungsverläufe bekannt, die zwischen den Zeiträumen, in denen eine Spannung an den Spulen angelegt wird, eine Ruhephase aufweisen, in der keine Spannung angelegt, sondern ausschließlich das Ausschwingverhalten der Spannung bestimmt wird.

Der abgebildete Verlauf des Spulenstroms B weist zwei Bereiche auf. In einem ersten Bereich ändert sich der Spulenstrom aufgrund einer Änderung der angelegten Spulenspannung. Dieser Bereich wird auch als Umschaltbereich bezeichnet. Im zweiten Bereich sind Spulenstrom und Spulenspannung im Wesentlichen konstant. Daher wird üblicherweise abgewartet, bis der Spulenstrom eingeschwungen und konstant ist bzw. den Zielwert erreicht hat, bevor die Messspannung an den Messelektroden abgegriffen und der Durchflussmesswert bestimmt wird. Der zweite Bereich wird auch als Messbereich bezeichnet. Des Weiteren weist der Verlauf des Spulenstrom drei weitere charakteristische Zeiträume ($\varepsilon$, $\delta$ und $\gamma$) auf.

Der $\varepsilon$-Zeitbereich deckt den Zeitraum ab, in dem der Spulenstrom die Fließrichtung ändert. Man spricht auch vom Nulldurchgang. Gerade beim Nulldurchgang fließt kein Spulenstrom durch die Spule und der Einfluss des elektrischen Widerstands der Spule auf die Selbstinduktivität der Spule wird vernachlässigbar klein. Dies ist besonders vorteilhaft, da dadurch Einflüsse durch die temperaturabhängige Leitfähigkeit des Spulenwicklungsmaterials beseitigt werden. Der $\varepsilon$-Zeitbereich weist einen $\varepsilon$-Zeitbereich-Anfang ($T_{\varepsilon\text{-}Anfang}$) und ein $\varepsilon$-Zeitbereich-Ende ($T_{\varepsilon\text{-}Ende}$) auf. Der $\varepsilon$-Zeitbereich beginnt, wenn der Betrag des gemessenen Spulenstromes kleiner 15%, insbesondere kleiner 10% und bevorzugt kleiner 5% des Betrages des Soll-Spulenstromes $I_{Soll}$ ist. Der $\varepsilon$-Zeitbereich endet wenn der Betrag des gemessenen Spulenstromes größer 15%, insbesondere größer 10% und bevorzugt größer 5% des Betrages des Soll-Spulenstromes $I_{Soll}$ ist, wobei $I_{Soll}$ gemäß der abgebildeten Ausgestaltung der Peak-Spulenstrom ist.

Der $\gamma$- und $\delta$-Zeitbereich liegen zeitlich unmittelbar hintereinander und decken im Wesentlichen den Zeitraum ab, in dem der Spulenstrom über- bzw. einschwingt. Der $\delta$-Zeitbereich umfasst den Zeitraum, in dem das Vorzeichen der Spulenstromänderung ein entgegengesetztes Vorzeichen hat als im $\gamma$-Zeitbereich. Des Weiteren nimmt die Spulenstromänderung in dem $\delta$-Zeitbereich ab, bis der Spulenstrom den Zielwert erreicht hat und der zweite Bereich beginnt. Der $\gamma$-Zeitbereich umfasst den Zeitraum unmittelbar vor dem $\delta$-Zeitbereich, wobei jedoch im gesamten Zeitbereich ein Spulenstrom fließt. Das heißt, dass der Nulldurchgang des Spulenstroms nicht im $\gamma$-Zeitbereich liegt. Vorzugsweise zeichnen sich die Spulenstromwerte des $\gamma$-Zeitbereiches dadurch aus, dass sie größer sind als der Zielwert des Spulenstroms im zweiten Bereich bzw. in dem Messbereich. Weiterhin ist der $\gamma$-Zeitbereich so gewählt, dass die Spulenstromwerte auf einer Geraden liegen. Es hat sich herausgestellt, dass die Wirbelströme im $\gamma$-Zeitbereich einen stabilen Zustand einnehmen und sich nicht bzw. nur geringfügig ändern. Somit ist auch ihr Einfluss auf die Selbstinduktivität der Spule minimal. Dadurch lassen sich bereits geringste Abweichungen der Selbstinduktivität vom Referenzwert die aufgrund externer Einflüsse entstehen detektieren und kompensieren. Der $\gamma$-Zeitbereich-Anfang ($T_{\gamma\text{-}Anfang}$) beginnt, wenn der Betrag des gemessenen Spulenstromes mindestens 75%, insbesondere mindestens 85% und bevorzugt 95% eines Betrages des Soll-Spulenstromes $I_{Soll}$ beträgt, wobei gemäß der abgebildeten Ausgestaltung der Soll-Spulenstromes $I_{Soll}$ dem Peak-Spulenstrom entspricht. Das $\gamma$-Zeitbereich-Ende ($T_{\text{-}Ende}$) wird durch den Beginn des $\delta$-Zeitbereiches definiert, insbesondere durch den Zeitpunkt, in dem der Spulenstrom die Stromrichtung ändert. Die Messwerte zur Ermittlung der Selbstinduktion stammen ausschließlich aus dem $\gamma$-Zeitbereich

**Bezugszeichenliste**

1    magnetisch-induktives Durchflussmessgerät

2    Messrohr
3    Messelektrode
4    magnetfelderzeugende Vorrichtung
5    Spule
6    Betriebsschaltung
7    Mess- und/oder Auswerteschaltung

$\varepsilon$    $\varepsilon$-Zeitbereich
$\gamma$    $\gamma$-Zeitbereich
$\delta$    $\delta$-Zeitbereich

$I_{Soll}$    Soll-Spulenstrom
$T_{\gamma\text{-}Anfang}$    $\gamma$-Zeitbereich-Anfang
$T_{\gamma\text{-}Ende}$    $\gamma$-Zeitbereich-Ende
$T_{\varepsilon\text{-}Anfang}$    $\varepsilon$-Zeitbereich-Anfang
$T_{\varepsilon\text{-}Ende}$    $\varepsilon$-Zeitbereich-Ende

**Patentansprüche**

1.  Verfahren zum Betreiben eines magnetisch-induktiven Durchflussmessgerätes (1),

    wobei das magnetisch-induktive Durchflussmessgerät (1) ein Messrohr (2) zum Führen eines fließfähigen Mediums, mindestens zwei Messelektroden (3) zum Erfassen einer strömungsgeschwindigkeitsabhängigen, in dem Medium induzierten Messspannung und eine magnetfelderzeugende Vorrichtung (4) zur Erzeugung eines das Messrohr (2) durchsetzenden Magnetfeldes aufweist,
    wobei die magnetfelderzeugende Vorrichtung (4) eine Spule (5) aufweist; umfassend die Verfahrensschritte:

    - Anlegen einer Steuerspannung an die Spule (5) zur Erzeugung einer zeitlichen Spulenstromänderung;
    - Bestimmen der zeitlichen Spulenstromänderung in einem Umschaltbereich,

    wobei im Umschaltbereich solange eine Spulenstromänderung vorliegt, bis ein Soll-Spulenstrom $I_{Soll}$ erreicht ist,
    wobei der Umschaltbereich einen $\gamma$-Zeitbereich ($\gamma$) umfasst,
    wobei die zeitliche Spulenstromänderung in dem $\gamma$-Zeitbereich ($\gamma$) ermittelt wird,
    wobei auf den $\gamma$-Zeitbereich ($\gamma$) unmittelbar ein $\delta$-Zeitbereich ($\delta$) folgt, in dem die Spulenstromänderung ein entgegengesetztes Vorzeichen hat als die Spulenstromänderung im $\gamma$-Zeitbereich ($\gamma$);

    - Messen einer an der Spule (5) anliegenden Spulenspannung; und
    - Ermitteln einer Selbstinduktivität der Spule (5) mittels der zeitlichen Spulenstromänderung und der Spulenspannung im $\gamma$-Zeitbereich ($\gamma$).

2.  Verfahren nach Anspruch 1,
    wobei im $\gamma$-Zeitbereich ($\gamma$) auftretende Wirbelströme im Wesentlichen zeitlich konstant sind.

3.  Verfahren nach Anspruch 1 und/oder 2,

    wobei der $\gamma$-Zeitbereich ($\gamma$) einen $\gamma$-Zeitbereich-Anfang ($T_{\gamma\text{-}Anfang}$) aufweist,
    wobei beim $\gamma$-Zeitbereich-Anfang ($T_{\gamma\text{-}Anfang}$) ein Betrag des Spulenstromes bei mindestens 75%, insbesondere mindestens 85% und bevorzugt 95% eines Betrages des Soll-Spulenstromes $I_{Soll}$ liegt.

4.  Verfahren nach mindestens einem der vorhergehenden Ansprüche, umfassend den Verfahrensschritt:

    - Ausgeben der zeitlichen Spulenstromänderung oder einer von der Spulenstromänderung abhängigen Größe.

5.  Verfahren nach mindestens einem der vorherigen Ansprüche, umfassend die Verfahrensschritte:

    - Bestimmen eines einer ermittelten Abweichung der zeitlichen Spulenstromänderung von einem Referenzwert zugeordneten Korrekturterms; und
    - Berechnen eines korrigierten Messspannungwertes $U_{korr}$ unter Berücksichtigung des Korrekturterms und eines gemessenen Messspannungwertes $U_{meas}$ und/oder einer korrigierten, vom gemessenen Messspannungswert abhängigen Größe.

6.  Verfahren nach Anspruch 5,

    wobei der Referenzwert mittels eines mathematischen Modells, Kalibrationsverfahrens und/oder Simulationsprogrammes ermittelt ist,
    wobei der Abweichung der zeitlichen Spulenstromänderung vom Referenzwert jeweils ein Korrekturterm zugeordnet ist.

7.  Magnetisch-induktives Durchflussmessgerät, **dadurch gekennzeichnet,**
    **dass** das Durchflussmessgerät eine Betriebs-, Mess- und/oder Auswerteschaltung (6, 7) aufweist, die dazu eingerichtet ist, das Verfahren nach einem der vorherigen Ansprüche auszuführen.

**Claims**

1. Method for operating an electromagnetic flowmeter (1),

   the magnetic-inductive flow meter (1) having a measuring tube (2) for conducting a flowable medium, at least two measuring electrodes (3) for detecting a flow-rate-dependent measuring voltage induced in the medium, and a magnetic-field-generating device (4) for generating a magnetic field passing through the measuring tube (2),
   the magnetic field generating device (4) having a coil (5);
   comprising the steps of:

   - applying a control voltage to the coil (5) to generate a temporal coil current change;
   - determining the temporal coil current change in a switchover range,

   wherein a coil current change is present in the changeover region until a setpoint coil current $I_{Soll}$ is reached,
   wherein the changeover region comprises a time range ($\gamma$),
   wherein the temporal coil current change is determined in the time range ($\gamma$),
   wherein the time range ($\gamma$) is immediately followed by a time range ($\delta$) in which the coil current change has an opposite sign to the coil current change in the time range ($\gamma$);

   - measuring a coil voltage present at the coil (5); and
   - determining an inductance of the coil (5) by means of the coil current change over time and the coil voltage in the time range ($\gamma$).

2. Method according to claim 1,
   wherein eddy currents occurring in the time domain ($\gamma$) are substantially constant over time.

3. Method according to claim 1 and/or 2,

   wherein the time domain ($\gamma$) has a time domain start ($T_{\gamma\text{-}Anfang}$),
   wherein at the start of the time range ($T_{\gamma\text{-}Anfang}$) an amount of the coil current is at least 75%, in particular at least 85% and preferably 95%, of an amount of the desired coil current $I_{soll}$.

4. Method according to at least one of the preceding claims, comprising the method step:
   outputting the temporal coil current change or a variable dependent on the coil current change.

5. Method according to at least one of the previous claims, comprising the method steps of:

   - determining a correction term associated with a determined deviation of the temporal coil current change from a reference value; and
   - calculating a corrected measured voltage $U_{korr}$ value taking into account the correction term and a measured measured voltage value $U_{meas}$ and/or a corrected variable dependent on the measured measured voltage value.

6. method according to claim 5,

   wherein the reference value is determined by means of a mathematical model, calibration method and/or simulation program,
   wherein a correction term is associated with the deviation of the temporal coil current change from the reference value in each case.

7. magnetic-inductive flowmeter, **characterized in that** the flowmeter has an operating, measuring and/or evaluation circuit (6, 7) which is set up to carry out the method according to one of the previous claims.

**Revendications**

1. Procédé pour faire fonctionner un débitmètre électromagnétique (1),

   le débitmètre magnéto-inductif (1) présentant un tube de mesure (2) pour le guidage d'un milieu fluide, au moins deux électrodes de mesure (3) pour la saisie d'une tension de mesure dépendant de la vitesse d'écoulement et induite dans le milieu, et un dispositif générateur de champ magnétique (4) pour la génération d'un champ magnétique traversant le tube de mesure (2),
   le dispositif de génération de champ magnétique (4) comportant une bobine (5) ;
   comprenant les étapes de procédé :

   - Application d'une tension de commande à la bobine (5) pour générer une variation temporelle du courant de la bobine ;
   - Détermination de la variation temporelle du courant de la bobine dans une plage de commutation,

   une variation de courant de bobine étant présente dans la plage de commutation jusqu'à ce qu'un courant de bobine de consigne soit atteint $I_{Soll}$,
   la plage de commutation comprenant une plage de temps ($\gamma$),

la variation temporelle du courant de bobine étant déterminée dans la plage de temps ($\gamma$), la plage de temps ($\gamma$) étant immédiatement suivie d'une plage de temps ($\delta$) dans laquelle la variation du courant de bobine est de signe opposé à la variation du courant de bobine dans la plage de temps ($\gamma$) ;

- Mesure d'une tension de bobine appliquée à la bobine (5) ; et
- Détermination d'une inductance propre de la bobine (5) au moyen de la variation temporelle du courant de la bobine et de la tension de la bobine dans la plage de temps (y).

2. Procédé selon la revendication 1,
dans lequel les courants de Foucault apparaissant dans la plage de temps (y) sont essentiellement constants dans le temps.

3. Procédé selon la revendication 1 et/ou 2,

la plage de temps ($\gamma$) présentant un début de plage de temps ($T_{\gamma\text{-}Anfang}$),
une valeur du courant de bobine au début de la plage de temps ($T_{\gamma\text{-}Anfang}$) étant d'au moins 75%, en particulier d'au moins 85% et de préférence de 95% d'une valeur du courant de bobine de consigne $I_{Soll}$.

4. Procédé selon au moins l'une des revendications précédentes, comprenant l'étape de procédé :

- Émettre la variation temporelle du courant de bobine ou une grandeur dépendant de la variation du courant de bobine.

5. Procédé selon au moins l'une des revendications précédentes, comprenant les étapes de procédé suivantes :

- Détermination d'un terme de correction associé à un écart déterminé de la variation temporelle du courant de bobine par rapport à une valeur de référence ; et
- Calcul d'une valeur de tension de mesure corrigée $U_{korr}$ en tenant compte du terme de correction et d'une valeur de tension de mesure mesurée $U_{meas}$ et/ou d'une grandeur corrigée dépendant de la valeur de tension de mesure mesurée.

6. Procédé selon la revendication 5,

dans lequel la valeur de référence est déterminée au moyen d'un modèle mathématique, d'un procédé d'étalonnage et/ou d'un programme de simulation,

un terme de correction étant associé à chaque écart entre la variation temporelle du courant de la bobine et la valeur de référence.

7. Débitmètre magnétique-inductif, **caractérisé en ce que**
en ce que le débitmètre comporte un circuit de fonctionnement, de mesure et/ou d'évaluation (6, 7) qui est conçu pour mettre en oeuvre le procédé selon l'une des revendications précédentes.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016122495 A1